# EUROPÄISCHE PATENTANMELDUNG

(11) **EP 2 306 117 A2**
(43) Veröffentlichungstag der Anmeldung: **06.04.2011**
(21) Anmeldenummer: 10009824.3
(22) Anmeldetag: 17.09.2010
(51) Int. Cl.: F24J 2/52

(54) **Montagesystem für Solaranlagen**

(30) Priorität: 17.09.2009 DE 202009012546 U
(71) Anmelder: VM Edelstahltechnik GmbH, 58840 Plettenberg (DE)
(72) Erfinder: Mächtle, Daniel, 58840 Plettenberg (DE)
(74) Vertreter: Otte & Jakelski Patentanwaltskanzlei

(57) **Zusammenfassung**

Ein Montagesystem für Solaranlagen als Indachsystem umfasst Rahmenprofile (11, 12) zur Halterung von Solarmodulen (10) und Trägerprofile (16, 17) zur Befestigung der Rahmenprofile (11, 12), wobei durch die Trägerprofile (16, 17) eine Abdichtung gegenüber einer Dachhaut realisiert wird.

## Beschreibung

Die vorliegende Erfindung betrifft ein Montagesystem für Solaranlagen als Indachsystem sowie ein Verfahren zur Montage von Solaranlagen als Indachsystem.

Solaranlagen sind technische Anlagen zur Umwandlung von Sonnenenergie in eine andere Energieform. Hierbei lassen sich thermische Solaranlagen und Fotovoltaikanlagen unterscheiden. Während thermische Solaranlagen insbesondere für eine Erwärmung von Wasser genutzt werden können, dienen Fotovoltaikaniagen zur Umwandlung der Sonnenenergie in elektrischen Strom. Kernelemente einer Fotovoltaikanlage sind Solarzellen, in denen diese Umwandlung stattfindet. Die Solarzellen werden zu den sogenannten Modulen bzw. Solarmodulen zusammengefasst.

Üblicherweise handelt es sich bei Solarmodulen um rechteckige plattenförmige Elemente. Diese Solarmodule werden beispielsweise an Gebäudefassaden und in besonders bevorzugter Weise auf einem Dach montiert, um sie der Sonnenstrahlung auszusetzen. Hierbei ist es möglich, die Solarmodule entweder auf der Dachdeckung, beispielsweise auf den Ziegeln, mit einer entsprechenden Gerüstkonstruktion anzubringen oder es wird ein Teil der Dachdeckung entfernt, sodass in diese Öffnung der Dachhaut die Solarmodule eingebaut werden können. Bei einem solchen sogenannten Indachsystem erfüllen die Solarmodule neben ihrer Funktion der Energieumwandlung auch die Aufgabe, die Abdeckung des Dachs zu vervollständigen, sodass die eigentliche Dachkonstruktion vor Witterungseinflüssen geschützt ist. Da ein Dach erheblichen Witterungseinflüssen ausgesetzt ist, ist eine Abdichtung der Solarmodule gegenüber der übrigen Dachdeckung nicht unproblematisch. Jegliches Eindringen von Feuchtigkeit kann erhebliche Schäden in der Dachkonstruktion und im gesamten Haus verursachen.

Um eine ausreichende Abdichtung zu gewährleisten, ist es üblich, bei einem Indachsystem die Solarmodule gegenüber der übrigen Dachhaut mit Blei- und Zinkschürzen oder anderen metallischen Bändern abzudichten. Problematisch hierbei ist, dass diese Abdichtung bzw. Verfachung sehr präzises Arbeiten erfordert, da jegliche Undichtigkeit im Laufe der Zeit zu erheblichen Schäden am Haus führt. Diese anspruchsvolle Arbeit ist in einer schwierigen Arbeitsposition, nämlich auf dem Dach, durchzuführen. Die Verfachung der Solarmodule sollte daher von einem Fachmann ausgeführt werden, insbesondere einem Flaschner bzw. Klempner. Auch die Fixierung und Montage der Solarmodule muss in dieser schwierigen Arbeitsposition durchgeführt werden, sodass die herkömmliche Montage von Solarmodulen insbesondere als Indachsystem schwierig und aufwendig ist.

Die Erfindung stellt sich die Aufgabe, die Montage von Solaranlagen als Indachsystem zu vereinfachen und insbesondere den Aufwand bei der Montage zu verringern.

Diese Aufgabe wird durch ein Montagesystem für Solaranlagen und durch ein Verfahren zu Montage von Solaranlagen gelöst, wie es Gegenstand der unabhängigen Ansprüche ist. Bevorzugte Ausführungsformen des Montagesystems bzw. des Verfahrens sind Gegenstand der abhängigen Ansprüche.

Bei dem erfindungsgemäßen Montagesystem handelt es sich um ein Montagesystem für Solaranlagen als Indachsystem. Das Montagesystem ist **dadurch gekennzeichnet, dass** Rahmenprofile zur Halterung von Solarmodulen und Trägerprofile zur Befestigung der Rahmenprofile mit den Solarmodulen auf dem bzw. in dem Dach vorgesehen sind. Hierbei sind die Trägerprofile derart ausgestaltet, dass sie eine Abdichtung der Solarmodule gegenüber der Dachhaut bzw. der Dachdeckung realisieren. Durch diese Ausgestaltung des erfindungsgemäßen Montagesystems wird die Montage der Solaranlage wesentlich vereinfacht und hinsichtlich des Zeitaufwandes verkürzt, da eine aufwendige Abdichtung bzw. Verfachung der montierten Solarmodule gegenüber der Dachhaut bzw. der Dachabdeckung beispielsweise durch Bleischürzen vollständig entfällt. Die sonst als separater Arbeitsschritt erforderliche Verfachung der Solarmodule, die in der Regel von einem Flaschner bzw. Klempner durchgeführt werden muss, ist nicht erforderlich. Die Trägerprofile des erfindungsgemäßen Montagesystems übernehmen also eine zweifache Funktion. Zum einen bilden sie ein Tragegerüst zur Anbringung der Solarmodule auf der Dachkonstruktion. Zum anderen übernehmen die Trägerprofile des erfindungsgemäßen Montagesystems die Funktion der Abdichtung der Solarmodule bzw. der Solaranlage gegenüber der Dachhaut.

Mit besonderem Vorteil weisen die Trägerprofile flächige Abschnitte auf, die die Abdichtung gegenüber der Dachhaut bewirken. Vorzugsweise weisen die Trägerprofile und insbesondere die flächigen Abschnitte zumindest teilweise rinnenförmige Strukturen auf, die die Ableitung von Wasser oder Feuchtigkeit verbessern. Zur Ausbildung der rinnenförmigen Strukturen können beispielsweise im rechten Winkel abragende Stege auf den flächigen Abschnitten der Trägerprofile vorgesehen sein. In anderen Ausführungsformen können hierfür längs verlaufende kantenartige Erhebungen innerhalb der flächigen Abschnitte, beispielsweise mit einem dreieckigen Querschnitt, vorgesehen sein.

Die in Anpassung an die Größe und Form der Solarmodule auf der Tragekonstruktion des Daches anzubringenden Trägerprofile werden vorzugsweise mit Trägerprofileckteilen miteinander verbunden. In Entsprechung zu den Trägerprofilen weisen auch die Trägerprofileckteile vorzugsweise flächige Abschnitte auf, die eine Ableitung von Wasser oder Feuchtigkeit erleichtern und ein Unterlaufen mit Flüssigkeit verhindern, sodass die Trägerprofile mit den Trägerprofileckteilen als Trägerprofilstruktur eine ausreichende Abdichtung der anschließend anzubringenden Solarmodule gegenüber der Dachhaut bzw. der Dachabdeckung ermöglichen.

In bevorzugten Ausführungsformen des erfindungsgemäßen Montagesystems ist es vorgesehen, dass die Trägerprofile auf der Dachkonstruktion eine Struktur bilden, die die anzubringenden Solarmodule nur an drei Seiten umschließt bzw. einfasst. Die in Traufrichtung weisende Seite bzw. Kante des Solarmoduls muss nicht unbedingt mit einem Trägerprofil unterlegt sein, da auch ohne ein Trägerprofil an dieser Seite eine ausreichende Abdichtung gewährleistet ist, beispielsweise indem diese Seite mit einer Bleischürze abgedeckt ist.

Erfindungsgemäß werden die Solarmodule, also die plattenförmigen Elemente, in denen die Solarzellen der Solaranlage zusammengefasst sind, von Rahmenprofilen gerahmt. Hierbei können die Kanten eines Rahmens ein oder mehrere Solarmodule umfassen. Zur Montage der Solaranlage werden zunächst die Trägerprofile an der Tragekonstruktion des Daches, also insbesondere den Dachsparren und den Dachlatten befestigt. Vorab muss gegebenenfalls die Dachdeckung, beispielsweise die Dachziegel, an der entsprechenden Stelle entfernt werden. Die Trägerprofile werden so auf der Tragekonstruktion angebracht, dass sie eine den Abmessungen der gerahmten Solarmodule angepasste Struktur bilden. Die Trägerprofile sind vorzugsweise mit Bohrnuten ausgestattet, die für deren Verschraubung in der Lattung der Tragekonstruktion des Daches vorgesehen sind. Auf dieser Trägerprofilstruktur werden in einem weiteren und abschließenden Arbeitsschritt die gerahmten Solarmodule befestigt. Eine weitere Abdichtung oder Verfachung entfällt.

In einer besonders bevorzugten Ausführungsform des erfindungsgemäßen Montagesystems ist zur Befestigung der Rahmenprofile an den Trägerprofilen eine Formschlussverriegelung vorgesehen. Eine Formschlussverriegelung verhindert eine falsche oder ungenaue Montage der gerahmten Solarmodule auf den Trägerprofilen. Hierdurch wird eine exakte Fixierung gewährleistet, die insbesondere auch im Hinblick auf die Dichtheit des gesamten Systems wichtig ist. Weiterhin vereinfacht eine Formschlussverriegelung die Montage erheblich, da beispielsweise nicht mit Bohr- oder Schraubmaschinen bei der Fixierung der empfindlichen Solarmodule hantiert werden muss. Durch eine Formschlussverriegelung der Rahmenprofile an den Trägerprofilen kann darüber hinaus der Zeitaufwand für die Hantierung mit den wegen ihrer Fläche und Empfindlichkeit unhandlichen Solarmodulen wesentlich verkürzt werden, sodass die Montage im Ergebnis deutlich vereinfacht wird.

Die Formschlussverriegelung von Rahmenprofilen und Trägerprofilen kann mit besonderem Vorteil durch Steckverbindungen realisiert sein. In einer besonders bevorzugten Ausführungsform sind in den Rahmenprofilen der Solarmodule Aussparungen bzw. Einbuchtungen und in den Trägerprofilen gegengleiche Einbuchtungen vorgesehen, die im zusammengefügten Zustand einen längsverlaufenden Hohlraum bilden, der zum Durchstecken eines Verriegelungselements, beispielsweise eines Stabes, vorgesehen ist. In dieser Ausführungsform werden die mit den Rahmenprofilen gerahmten Solarmodule in das von den Trägerprofilen gebildete Gerüst bzw. die Struktur, das bzw. die vorzugsweise an einer Seite offen ist, eingeschoben. Durch die gegengleichen Aussparungen der Rahmenprofile und der Trägerprofile können die Solarmodule durch Durchstecken eines der Form der Aussparung angepassten Stabes, beispielsweise eines Rundstabes oder eines Kantstabes, sicher verriegelt werden. Nach dem Einschieben des Stabes kann in an sich bekannter Weise das Verriegelungselement mit einem Stift oder ähnlichem arretiert werden.

In einer besonders bevorzugten Ausführungsform des erfindungsgemäßen Montagesystems weisen die Rahmenprofile der Solarmodule im Querschnitt wenigstens einen, vorzugsweise zwei Vorsprünge auf. Diese Vorsprünge sind dazu vorgesehen, eine Berührungsstelle zwischen dem Rahmenprofil und dem Trägerprofil nach oben hin abzudecken und abzuschirmen, sodass von oben auftreffendes Wasser oder auftreffende Feuchtigkeit nicht in die Stoßstellen eindringt. Vorzugsweise sind hierfür hakenförmige Vorsprünge vorgesehen, die ein optimales Ableiten von Wasser oder Feuchtigkeit gewährleisten.

In einer weiteren bevorzugten Ausführungsform des erfindungsgemäßen Montagesystems sind die Rahmenprofile für die Solarmodule mit Belüftungsbohrungen ausgestattet. Hierbei sind die Belüftungsbohrungen derart angeordnet, dass die Solarmodule von unten, also auf der der Sonneneinstrahlung abgewandten Seite, belüftet werden. Hierdurch kann eine übermäßige Überhitzung der Solarmodule vermieden werden. Durch die Belüftungsbohrungen und die damit verbundene Kühlung der Solarmodule bzw. der Solarzellen wird die Ausbeute an elektrischer Energie optimiert, da eine für die Stromerzeugung nachteilige übermäßige Wärmeentwicklung an den Solarmodulen verhindert wird.

Die Rahmenprofile sind vorzugsweise so gestaltet, dass sie die hiervon einzufassenden Solarmodule nicht oder nicht wesentlich überragen. Dies hat den Vorteil, dass nach außen hin keine Kanten gebildet werden, die anfällig für die Anhaftung von Verunreinigung sein könnten.

In einer bevorzugten Ausgestaltung des erfindungsgemäßen Montagesystems sind die Solarmodule zum Einstecken in die Rahmenprofile vorgesehen. Zur Abdichtung der Solarmodule sind hierbei mit besonderem Vorteil Profilgummis vorgesehen, die auf die Kanten der Solarmodule aufgezogen werden bzw. die die Solarmodule einfassen, bevor die Solarmodule in die Rahmenprofile eingesteckt werden. In einer anderen bevorzugten Ausführungsform sind die Solarmodule zum Einkleben in die Rahmenprofile vorgesehen. Dies kann vorzugsweise so realisiert werden, dass die Solarmodule bzw. die randseitigen Bereiche der Solarmodule auf einem entsprechenden Steg des Rahmenprofils aufgelegt und verklebt werden. Die Rahmenprofile sind hierbei so gestaltet, dass die obere Seite des Rahmenprofils bündig mit der oberen Fläche des Solarmoduls abschließt. Dies hat den Vorteil, dass keine Kante gebildet wird, an der sich Verunreinigungen ansammeln könnten. Hierdurch wird der Pflegeaufwand für die Solaranlage verringert. Falls erforderlich, kann eine weitere Abdichtung, beispielsweise mit Silikon, vorgenommen werden. Eine Abdichtung mit einer Silikonmasse oder ähnlichem kann auch bei den mit einem Profilgummi in die Rahmenprofile eingefassten Solarmodulen vorgesehen sein.

Vorzugsweise umfasst das Montagesystem zur Vervollständigung der Rahmung der Solarmodule Rahmenprofileckteile. Zur Rahmung der Solarmodule bzw. Laminate werden also die Rahmenprofile in entsprechender Länge an den Kanten der Solarmodule, die gegebenenfalls von einem Profilgummi eingefasst sind, aufgesteckt oder verklebt. Zur Fixierung der einzelnen Rahmenprofile an den Kanten des Solarmoduls werden die Rahmenprofileckteile angebracht, vorzugsweise aufgesteckt. In einer besonders bevorzugten Ausgestaltung der Rahmenprofileckteile sind diese mit Hinterschneidungen bzw. Einhöhlungen, die beispielsweise in Steckfortsätzen angeordnet sind, ausgestattet, sodass die Eckteile bei einem Formschluss der Rahmenprofileckteile mit den Rahmenprofilen einrasten.

Das erfindungsgemäße Verfahren zur Montage von Solaranlagen hat den Vorteil, dass der schwierigere Teil der Montage, nämlich die korrekte Anbringung der Trägerprofile an der Tragekonstruktion des Daches, mit leichten Teilen, also mit den Trägerprofilen, vorgenommen werden kann. Die Montagearbeiten mit den unhandlichen und schweren Solarmodulen erfolgen im Wesentlichen nicht auf dem Dach, da die Rahmung der Solarmodule mit den Rahmenprofilen hiervon unabhängig am Boden erfolgen kann. Der zeitliche Aufwand für die Endmontage der gerahmten Solarmodule an den Trägerprofilen auf dem Dach ist gering. Daneben ist dieser Arbeitsschritt sehr leicht durch die vorzugsweise vorgesehene Formschlussverriegelung durchführbar.

Die Rahmenprofile für die Solarmodule können derart ausgelegt sein, dass sie zur Einfassung bzw. Einrahmung von mehreren Solarmodulen zusammen vorgesehen sind, beispielsweise können bis zu sechs Solarmodulen geeigneter Größe in einem Rahmenprofilrahmen eingefasst werden. Vorzugsweise sind zur Fixierung und Abdichtung der aneinander angrenzend zu montierenden Solarmodule Mittelstege vorgesehen.

Für die Anordnung von mehreren Solarmodulen nebeneinander, die jeweils für sich oder zu mehreren zusammen gerahmt sind, sind vorzugsweise Mittelprofile vorgesehen. Diese Mittelprofile können an Stelle eines oder mehrerer seitlicher Trägerprofile in der Trägerprofilstruktur auf der Dachkonstruktion eingesetzt werden. Diese Mittelprofile entsprechen also im Wesentlichen den seitlichen Trägerprofilen, wobei sie zur Befestigung von zwei benachbart liegenden gerahmten Solarmodulen vorgesehen sind.

In einer besonders bevorzugten Ausführungsform sind die verschiedenen Elemente des erfindungsgemäßen Montagesystems zumindest teilweise aus Aluminium gefertigt. Vorzugsweise sind die einzelnen Elemente darüber hinaus in Leichtbauweise, das heißt mit möglichst wenig Materialverbrauch gestaltet, sodass das erfindungsgemäße Montagesystem vom Gewicht her leicht zu handhaben ist und daher die Montage erleichtert wird. Darüber hinaus wird durch die Leichtbauweise die gewichtsmäßige Belastung der Dachkonstruktion verringert. Beispielsweise sind die Rahmenprofile vorzugsweise in einer gekammerten Bauweise hergestellt, um deren Gewicht zu reduzieren.

Die Erfindung umfasst weiterhin ein Trägerprofil für die Montage von Solaranlagen als Indachsystem. Dieses Trägerprofil ist zur Befestigung von gerahmten Solarmodulen vorgesehen und ist **dadurch gekennzeichnet, dass** durch das Trägerprofil eine Abdichtung der Solaranlage bzw. der Solarmodule gegenüber der Dachhaut realisiert wird. Bezüglich weiterer Merkmale dieses erfindungsgemäßen Trägerprofils wird auf die obige Beschreibung verwiesen.

Die Erfindung umfasst schließlich ein Verfahren zur Montage von Solaranlagen als Indachsystem. Sofern die Solaranlage nachträglich installiert wird, wird das Dach zunächst zumindest teilweise von den Dachdeckungselementen, beispielsweise von den Dachziegeln, befreit. Auf der Tragekonstruktion des Daches wird eine Trägerprofilstruktur montiert, die eine Abdichtung bzw. eine Verfachung der Solaranlage realisiert. An dieser Trägerprofilstruktur wird wenigstens ein mit einem Rahmenprofil eingefasstes Solarmodul eingefügt. Vorzugsweise wird bei der Montage der Trägerprofilstruktur auf der Dachkonstruktion eine Seite offen gelassen. Dies erleichtert ein Einschieben der gerahmten Solarmodule in die Trägerprofilstruktur und deren Verriegelung. Nach der erfolgten Verriegelung wird die noch offene Seite der Trägerprofilstruktur mit einem abschließendem Trägerprofil und den entsprechenden Trägerprofileckteilen geschlossen. Bezüglich weiterer Merkmale des Verfahrens zur Montage von Solaranlagen wird auf die obige Beschreibung verwiesen.

In den Figuren zeigen:
- Figur 1: eine Ausführungsform des erfindungsgemäßen Montagesystems in explosiver Darstellung und
- Figuren 2 bis 10: einzelne Elemente des erfindungsgemäßen Montagesystems.

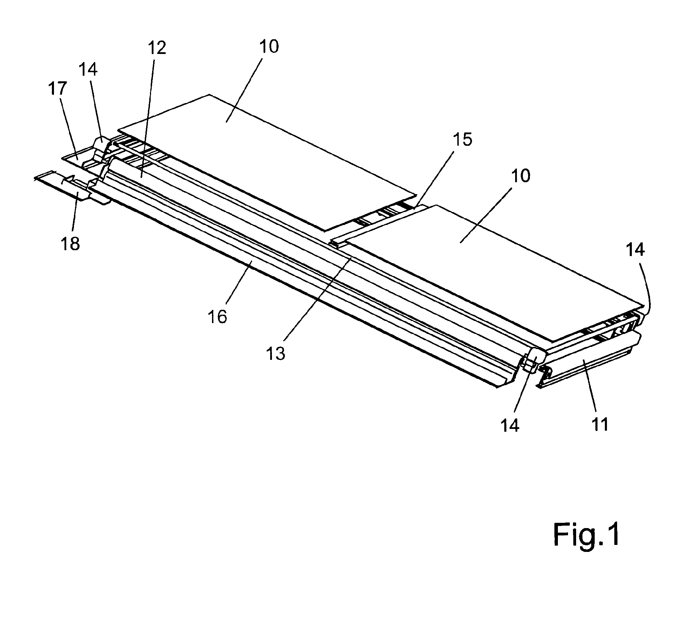

Aus der **Figur 1** gehen die einzelnen Elemente einer bevorzugten Ausführungsform des erfindungsgemäßen Montagesystems in explosiver Darstellung hervor. Es sind zwei in etwa quadratische Solarmodule 10 gezeigt, die gemeinsam von Rahmenprofilen 11 und 12 umrahmt sind. Hierbei sind die beiden zusammengefassten Solarmodule 10 gemeinsam von einem umlaufenden Profilgummi 13 eingefasst und werden zusammen mit dem Profilgummi in entsprechende Aussparungen der Rahmenprofile 11 und 12 an allen vier Kanten eingesteckt. Zur Vervollständigung der Rahmung der Solarmodule 10 sind an allen vier Ecken Rahmenprofileckteile 14 vorgesehen. Zur Verbindung der beiden Solarmodule 10 untereinander ist ein Mittelsteg 15 vorgesehen. Zur Anbringung der gerahmten Solarmodule 10 auf bzw. in dem Dach sind Trägerprofile 16 und 17 vorgesehen, die auf der Dachtragekonstruktion, insbesondere den Dachsparren und Dachlatten, befestigt werden. Diese Trägerprofile 16 und 17 weisen flächig nach außen ragende Abschnitte auf, die der Abdichtung gegenüber der Dachhaut und der Ableitung von Wasser dienen. Zur Vervollständigung der Trägerprofilstruktur sind die Trägerprofile 16 und 17 durch Trägerprofileckteile 18 miteinander verbunden.

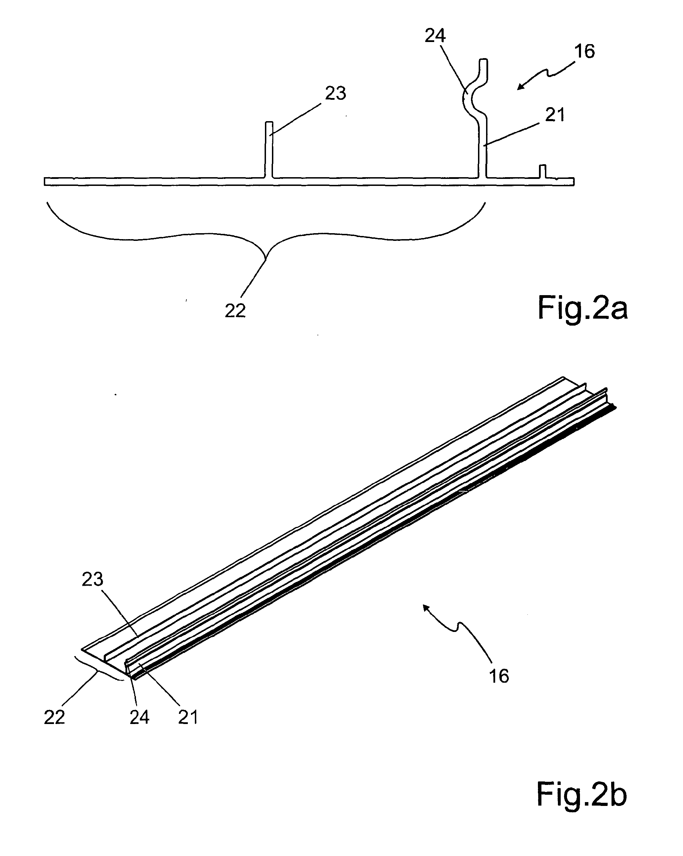

Aus den weiteren Figuren 2 bis 10 gehen Details zu den einzelnen Elementen des erfindungsgemäßen Montagesystems hervor. So zeigt **Figur 2** das erfindungsgemäße Trägerprofil 16, das für eine Anbringung in First-TraufRichtung auf der Dachtragekonstruktion, also seitlich der Solarmodule, vorgesehen ist. **Figur 2a** zeigt das Trägerprofil 16 im Querschnitt. **Figur 2b** zeigt das Trägerprofil 16 in isometrischer Darstellung. Das Trägerprofil 16 weist einen Befestigungssteg 21 auf, an den ein Rahmenprofil 12 des Solarmoduls anfügbar ist. In dieser Darstellung links von dem Befestigungssteg 21 setzt sich ein flächiger Abschnitt 22 des Trägerprofils 16 fort, der der Abdichtung gegenüber der Dachhaut dient. Dieser flächige Abschnitt 22 ist durch einen weiteren Steg 23 geteilt, der eine rinnenartige Struktur auf dem Trägerprofil realisiert und die Wasserableitung auf dem Dach verbessert. Das Trägerprofil 16 kann mit üblichen Methoden auf der Dachtragekonstruktion, insbesondere auf den Dachsparren oder Dachlatten, befestigt werden, beispielsweise durch Verschraubung. Hierfür können Bohrnuten (nicht dargestellt) in dem Trägerprofil 16 vorgesehen sein.

Zur Befestigung und Arretierung der gerahmten Solarmodule 10 an der Trägerprofilstruktur weisen die seitlichen Trägerprofile 16 am Befestigungssteg 21 eine Aussparung bzw. Einbuchtung 24 auf, die in etwa halbkreisförmig gestaltet ist. Bei einer etwa gegengleichen Aussparung des an dieser Stelle anzufügenden Rahmenprofils bilden diese gegengleichen Aussparungen im zusammengesetzten Zustand einen Hohlraum, der zum Durchstecken eines Verriegelungselementes, insbesondere eines Rundstabes, vorgesehen ist. Hierdurch kann in sehr einfach zu handhabender Weise eine Montage der Solarmodule 10 auf dem Dach vorgenommen werden, die zum einen eine korrekte Position der Solarmodule sicherstellt und zum anderen mit wenigen Handgriffen eine dauerhafte und dennoch lösbare Fixierung der Solarmodule erlaubt.

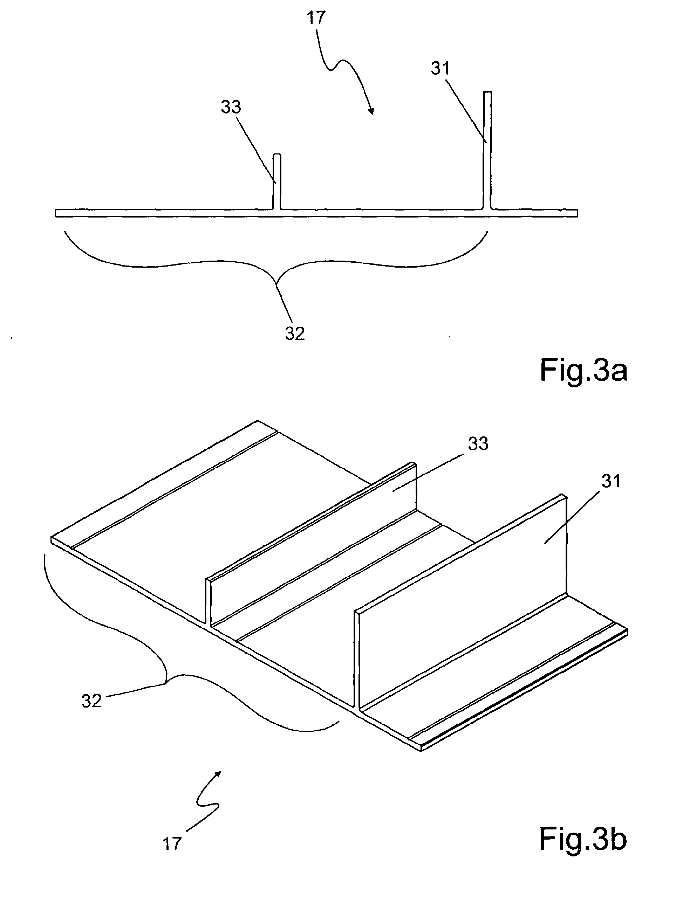

**Figur 3** zeigt das weitere Trägerprofil 17, das zur oberen und/oder zur unteren Begrenzung der Trägerprofilstruktur parallel zum First bzw. zur Dachtraufe vorgesehen ist. **Figur 3a** zeigt das Trägerprofil 17 im Querschnitt. **Figur 3b** zeigt das Trägerprofil 17 in isometrischer Darstellung. Auch hier ist ein Befestigungssteg 31 vorgesehen, der zum Anfügen der Rahmenprofile der Solarmodule vorgesehen ist. Der flächige Abschnitt 32 des Trägerprofils 17 ist durch einen Steg 33 unterteilt.

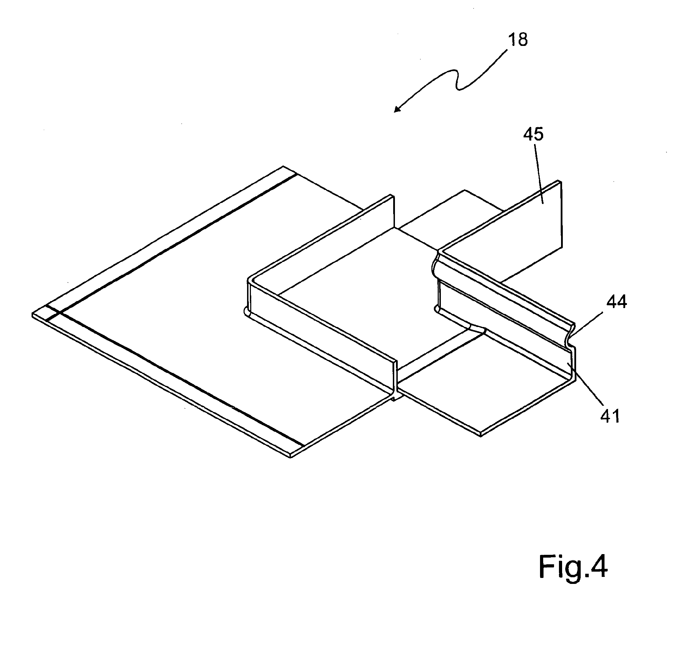

**Figur 4** zeigt das Trägerprofileckteil 18, das zur Verbindung der seitlichen Trägerprofile 16 und der oberen bzw. unteren Trägerprofile 17 vorgesehen ist. Das Trägerprofileckteil 18 ist so gestaltet, dass Überlappungen zwischen den einzelnen Elementen im zusammengebauten Zustand gewährleistet sind, sodass das gesamte rahmenförmige Trägerprofil eine zuverlässige Abdichtung der Dachhaut gegenüber Wasser oder Feuchtigkeit gewährleistet. Hierbei wird der Befestigungssteg 21 mit der Ausbuchtung 24 des Trägerprofils 16 durch einen Steg 41 mit der Einbuchtung 44 im Trägerprofileckteil 18 fortgesetzt. Auf der anderen Seite des Trägerprofileckteils 18 stellt der Steg 45 die Verbindung zum Befestigungssteg 31 des Trägerprofils 17 her.

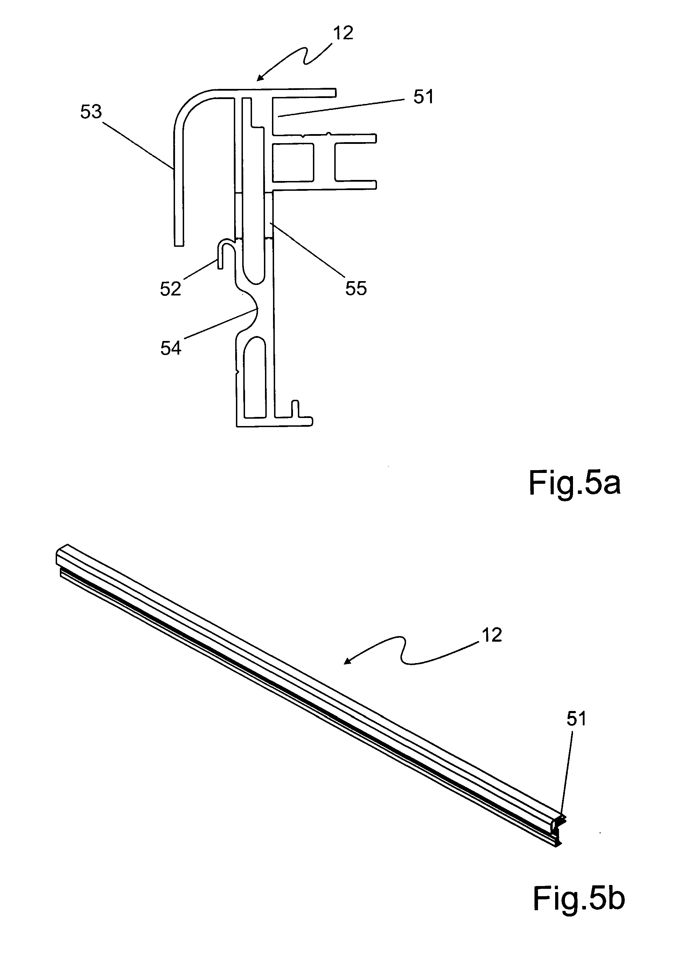

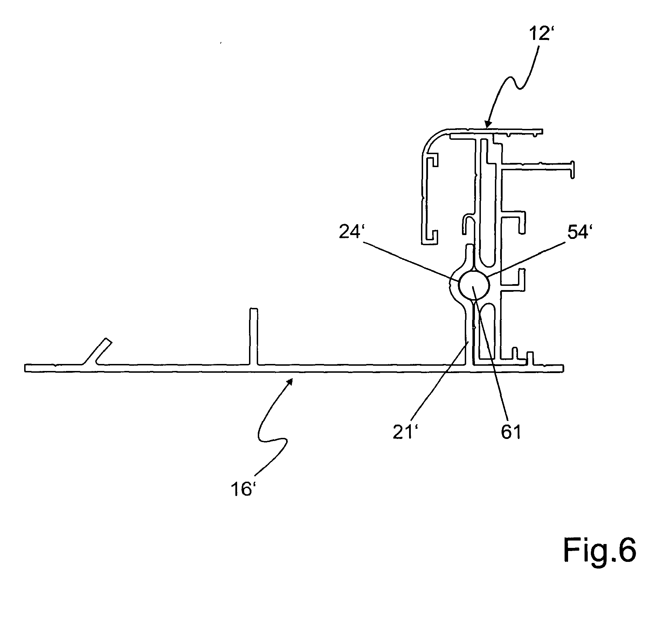

**Figur 5** zeigt das Rahmenprofil 12, das zur Einrahmung der Solarmodule 10 vorgesehen ist. **Figur 5a** zeigt einen Querschnitt durch das Rahmenprofil 12. **Figur 5b** zeigt eine isometrische Ansicht des Rahmenprofils 12. Das Rahmenprofil 12 umfasst einen Bereich 51, der zum Einstecken des flächigen Solarmoduls, das vorzugsweise mit einem Profilgummi eingefasst ist, vorgesehen ist. Das Rahmenprofil 12 weist weiterhin eine Einbuchtung 54 auf. Im montierten Zustand liegt diese Einbuchtung 54 unmittelbar gegenüber der gegengleichen Einbuchtung 24 des Trägerprofils 16, sodass die gegengleichen Einbuchtungen 24 und 54 in Längsrichtung einen rohrförmigen Hohlraum bilden, der eine Verriegelung und zuverlässige Fixierung der Trägerprofile 16 und Rahmenprofile 12 erlaubt. Oberhalb der Berührungsstelle des Befestigungsstegs 21 des Trägerprofils 16 ist bei dem Rahmenprofil 12 ein hakenförmiger Vorsprung 52 vorgesehen, der diese Berührungsstelle gegen eindringende Feuchtigkeit oder Wasser schützt. Daneben ist ein weiterer, größerer hakenförmiger Vorsprung 53 vorgesehen, der einen weiteren Schutz gegen Wasser oder Feuchtigkeit bietet. Durch diese Gestaltung des Rahmenprofils 12 kann das mit diesem Rahmenprofil eingerahmte Solarmodul 10 von oben unmittelbar auf das Trägerprofil 16 aufgesteckt werden, wie es in der Figur 6 illustriert ist.

Das Rahmenprofil 12 weist über die Längsrichtung verteilt mehrere Belüftungsbohrungen 55 auf, die eine Belüftung unterhalb der eingesetzten Solarmodule erlauben und so eine übermäßige und unproduktive Wärmeentwicklung in den Solarzellen vermeiden (Figur 5a).

Das Rahmenprofil 12 ist in gekammerter Bauweise realisiert, um das Gewicht zu reduzieren und die Stabilität zu erhöhen. Vorzugsweise sind sowohl dieses als auch andere Elemente des erfindungsgemäßen Montagesystems als Strangpressprofile aus Aluminium gefertigt, auch dies insbesondere im Hinblick auf eine leichte Bauweise des Montagesystems.

**Figur 6** illustriert eine weitere Ausführungsform des Trägerprofils 16' und des Rahmenprofils 12' im zusammengefügten Zustand. Hierbei ist das Rahmenprofil 12' rechts neben dem Befestigungssteg 21' des Trägerprofils 16' angefügt. Die gegengleichen Ausbuchtungen 24' und 54' bilden einen rohrförmigen Hohlraum, in den ein Rundstab 61 eingeschoben ist, der zur Verriegelung der verschiedenen Elemente vorgesehen ist.

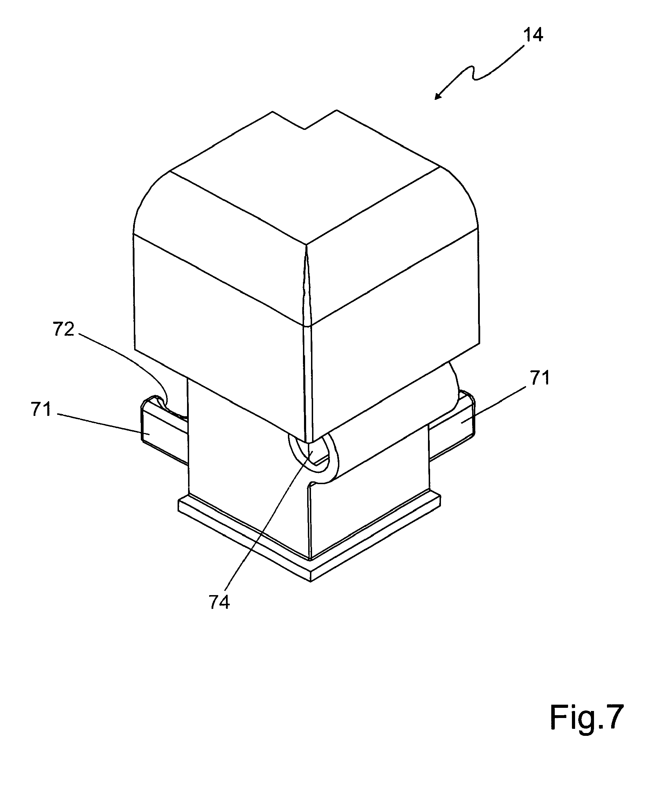

**Figur 7** zeigt ein Rahmenprofileckteil 14 in isometrischer Ansicht, das zur Fixierung und zum Abschluss des von den Rahmenprofilen 11 und 12 gebildeten Rahmens der Solarmodule 10 vorgesehen ist. Im montierten Zustand verbindet das Rahmenprofileckteil 14 die im rechten Winkel zueinander stehenden Rahmenprofile 11 und 12. Zur Fortsetzung des rohrförmigen Hohlraums, der von den gegengleichen Einbuchtungen 54 und 24 des Rahmenprofils 12 und des Trägerprofils 16 gebildet wird, weist das Rahmenprofileckteil 14 eine Aussparung 74 auf. Das Rahmenprofileckteil 14 weist Steckverbindungselemente 71 auf, die mit Hinterschneidungen 72 ausgestattet sind, sodass das Rahmenprofileckteil 14 beim Aufstecken auf die Rahmenprofile 11 und 12 einrasten kann. Das Rahmenprofileckteil 14 kann beispielsweise als Druckgussteil aus Aluminium oder als Spritzgussteil aus Kunststoff hergestellt sein.

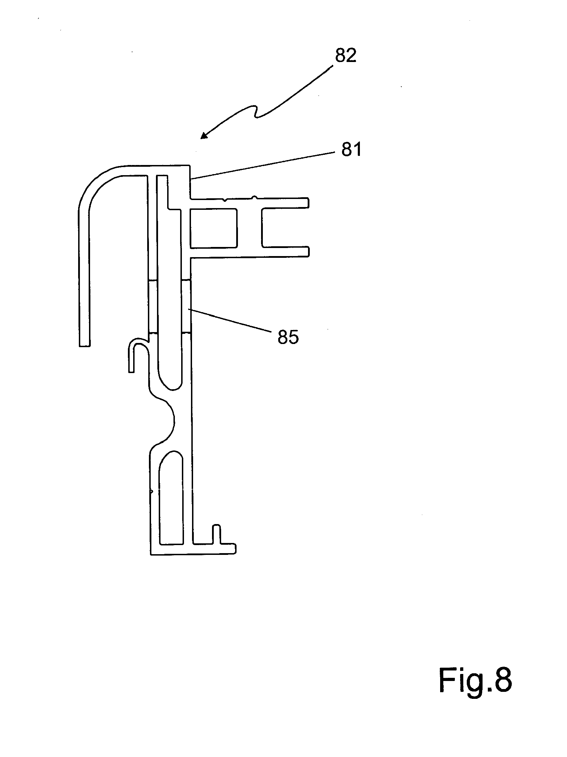

**Figur 8** zeigt eine weitere Ausführungsform 82 eines Rahmenprofils. Das Rahmenprofil 82 ist für eine Verklebung des Solarmoduls mit dem Rahmenprofil in dem Bereich 81 vorgesehen. Hierfür werden die Kanten des Solarmoduls bündig in dem Bereich 81 des Rahmenprofils 82 eingelegt und mit einem geeigneten Klebstoff verklebt. Im Übrigen entspricht das Rahmenprofil 82 dem Rahmenprofil 12 und es wird diesbezüglich auf die Beschreibung zur Figur 5 verwiesen. Die geklebte Ausführung hat gegenüber der gesteckten Ausführung den Vorteil, dass auf der Oberseite des Rahmenprofils 82 in dem Bereich 81 an dem Übergang zwischen dem Rahmenprofil 82 und dem einzuklebenden Solarmodul keine weitere Kante gebildet wird, die eine Sammelstelle für Verunreinigungen bieten könnte. Somit ist der Pflegeaufwand für diese geklebte Ausführungsform noch geringer als bei der vorher beschriebenen Ausführungsform 12. Zur weiteren Abdichtung zwischen Rahmenprofil 82 und dem Solarmodul kann beispielsweise eine Abdichtung mit Silikon an der Berührungsstelle zwischen Rahmenprofil 82 und Solarmodul vorgesehen sein.

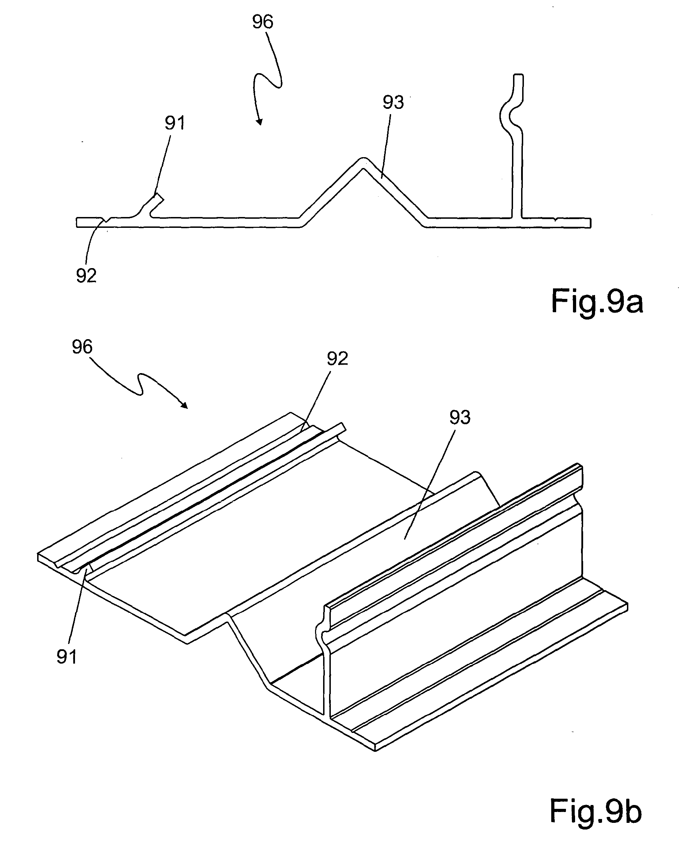

Aus der **Figur 9** geht eine weitere Ausführungsform 96 des seitlichen Trägerprofils hervor. Hierbei weist das seitliche Trägerprofil 96 statt des Steges 23 der Ausführungsform 16 in Figur 2 eine Kante 93 auf, die ebenfalls der Wasserableitung dient. Weiterhin umfasst das Trägerprofil 96 eine hakenförmig aufgebogene Kante 91 zum gleichen Zweck. Es ist möglich, die verschiedenen Stege, Kanten und hakenförmigen Kanten in unterschiedlicher Weise zu kombinieren. Die Kanten und Stege der Trägerprofile realisieren rinnenförmige Strukturen in den Trägerprofilen, die der Ableitung beispielsweise von Regenwasser dienen. Weiterhin ist eine Sollbruchstelle 92 in Form einer längs verlaufenden Rille illustriert, die eine Verkürzung des Trägerprofils 96 durch einfaches Abknicken an dieser Stelle erlaubt, sodass das Trägerprofil 96 bei der Montage an die jeweiligen Gegebenheiten angepasst werden kann. Derartige Sollbruchstellen können an verschiedenen Stellen der Elemente des erfindungsgemäßen Montagesystems vorgesehen sein.

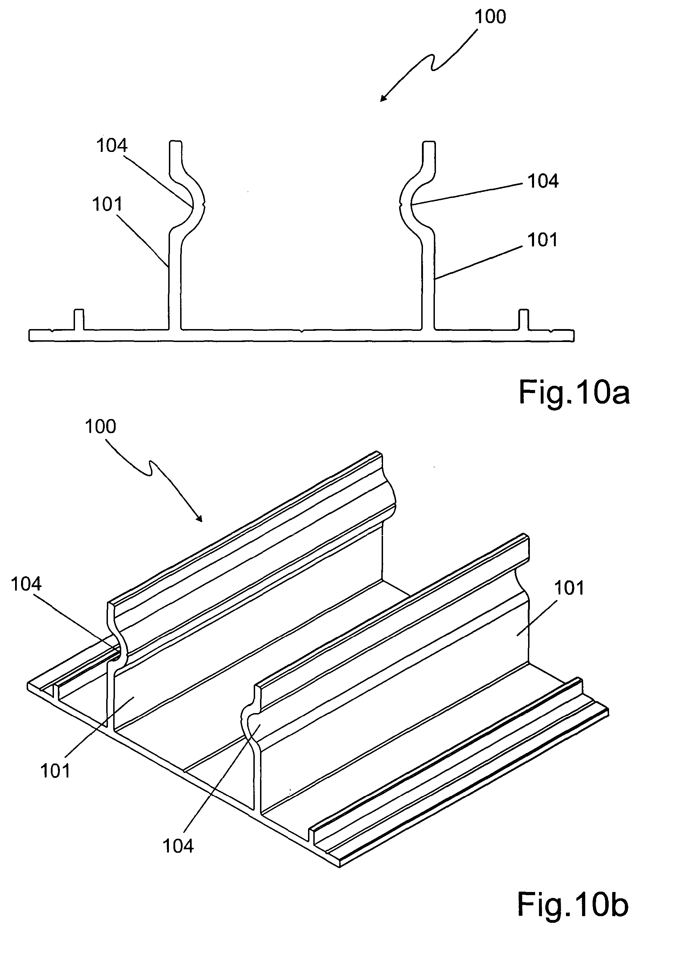

Für die Anordnung von mehreren gerahmten Solarmodulen nebeneinander können Mittelprofile als Elemente der Trägerprofilstruktur vorgesehen sein, die seitliche Trägerprofile, beispielsweise Trägerprofile 16, ersetzen können. **Figur 10** zeigt ein derartiges Mittelprofil 100. **Figur 10a** zeigt das Mittelprofil 100 im Querschnitt. **Figur 10b** zeigt das Mittelprofil 100 in isometrischer Darstellung. Die einander gegenüberliegenden Befestigungsstege 101 weisen halbkreisförmige Einbuchtungen 104 auf, die zusammen mit gegengleichen Einbuchtungen der einzusetzenden Rahmenprofile rohrförmige Hohlräume in Längsrichtung bilden, die zum Durchstecken beispielsweise eines Rundstabes vorgesehen sind und damit zur Verriegelung der gerahmten Solarmodule geeignet sind. Vergleichbar mit den Trägerprofileckteilen 18 können T-Stücke zur Vervollständigung der Trägerprofilstruktur bei Verwendung der Mittelprofile 100 vorgesehen sein.

Für die Montage des erfindungsgemäßen Montagesystems für Solaranlagen in einem Dach wird zunächst die Dachhaut bzw. werden die Dachziegel zum Teil entfernt, sodass die Dachsparren und Dachlatten freigelegt werden. An die Dachlatten und/oder die Dachsparren werden die Trägerprofile beispielsweise durch Verschraubung befestigt. Anschließend werden die Trägerprofile mit den Trägerprofileckteilen verbunden, sodass die Trägerprofilstruktur vervollständigt wird. Die zuvor mit den Rahmenprofilen gerahmten Solarmodule werden auf die Trägerprofilstruktur aufgeschoben. Hierbei bilden die oben erläuterten Einbuchtungen zwischen den Befestigungsstegen der Trägerprofilstruktur und der Rahmenprofile rohrförmige Hohlräume, sodass insbesondere Rundstäbe durch diese Hohlräume durchgesteckt und damit das gerahmte Solarmodul auf der Trägerprofilstruktur befestigt und verriegelt werden kann. Anschließend wird die Dachhaut durch das Eindecken mit den fehlenden Dachziegeln vervollständigt. Eine weitere Abdichtung der Konstruktion gegenüber der Dachhaut ist nicht erforderlich, da durch die Ausbildung der Trägerprofile die Abdichtung bzw. Verfachung bereits realisiert ist. Es kann vorgesehen sein, die Trägerprofile nur an drei Seiten der Solarmodule, also insbesondere seitlich und oben, zu verwenden. Die nach unten weisende Seite kann beispielsweise mit einer Bleischürze in herkömmlicher Weise abgedichtet sein. Dies kann gegebenenfalls die Montage der gerahmten Solarmodule erleichtern.

## Patentansprüche

1. Montagesystem für Solaranlagen als Indachsystem, **dadurch gekennzeichnet, dass** das Montagesystem Rahmenprofile (11, 12; 82) zur Halterung von Solarmodulen (10) und Trägerprofile (16, 17; 96) zur Befestigung der Rahmenprofile (11, 12; 82) aufweist, wobei durch die Trägerprofile (16, 17; 96) eine Abdichtung gegenüber einer Dachhaut realisiert wird.

2. Montagesystem nach Anspruch 1, **dadurch gekennzeichnet, dass** die Trägerprofile (11, 12) flächige Abschnitte (22, 32) und vorzugsweise zumindest teilweise rinnenförmige Strukturen zur Leitung von Wasser aufweisen.

3. Montagesystem nach Anspruch 1 oder Anspruch 2, **dadurch gekennzeichnet, dass** das Montagesystem Trägerprofileckteile (18) umfasst.

4. Montagesystem nach einem der vorhergehenden Ansprüche, **dadurch gekennzeichnet, dass** die Trägerprofile (16, 17; 96) zum Einfassen der Solarmodule (10) an wenigstens drei Kanten der Solarmodule (10) vorgesehen sind.

5. Montagesystem nach einem der vorhergehenden Ansprüche, **dadurch gekennzeichnet, dass** zur Befestigung der Rahmenprofile (11, 12; 82) an den Trägerprofilen (16, 17; 96) eine Formschlussverriegelung vorgesehen ist.

6. Montagesystem nach Anspruch 5, **dadurch gekennzeichnet, dass** zur Formschlussverriegelung die Rahmenprofile (11, 12; 82) und die Trägerprofile (16, 17; 96) zumindest teilweise gegengleiche Einbuchtungen (24, 54) aufweisen, die im zusammengesetzten Zustand der Rahmenprofile und der Trägerprofile zum Durchstecken von Verriegelungselementen (61), insbesondere von Stäben, vorgesehen sind.

7. Montagesystem nach einem der vorhergehenden Ansprüche, **dadurch gekennzeichnet, dass** die Rahmenprofile (12) wenigstens einen, vorzugsweise zwei Vorsprünge (52, 53), insbesondere hakenförmige Vorsprünge, zur Ableitung von Wasser und/oder Feuchtigkeit aufweisen.

8. Montagesystem nach einem der vorhergehenden Ansprüche, **dadurch gekennzeichnet, dass** die Rahmenprofile (12; 82) Belüftungsbohrungen (55) aufweisen.

9. Montagesystem nach einem der vorhergehenden Ansprüche, **dadurch gekennzeichnet, dass** die Solarmodule (10) zum Einstecken in die Rahmenprofile (12) vorgesehen sind, wobei vorzugsweise zur Einfassung der Solarmodule (10) wenigstens ein Profilgummi vorgesehen ist.

10. Montagesystem nach einem der Ansprüche 1 bis 8, **dadurch gekennzeichnet, dass** die Solarmodule (10) zum Einkleben in die Rahmenprofile (82) vorgesehen sind.

11. Montagesystem nach einem der vorhergehenden Ansprüche, **dadurch gekennzeichnet, dass** das Montagesystem Rahmenprofileckteile (14) umfasst.

12. Montagesystem nach Anspruch 11, **dadurch gekennzeichnet, dass** die Rahmenprofileckteile (14) Hinterschneidungen (72) zur Ausbildung einer Rastverbindung aufweisen.

13. Montagesystem nach einem der vorhergehenden Ansprüche, **dadurch gekennzeichnet, dass** zur Fixierung und Abdichtung von aneinander angrenzend zu montierenden Solarmodulen wenigstens ein Mittelsteg (15) vorgesehen ist.

14. Montagesystem nach einem der vorhergehenden Ansprüche, **dadurch gekennzeichnet, dass** das Montagesystem Mittelprofile (100) umfasst.

15. Montagesystem nach einem der vorhergehenden Ansprüche, **dadurch gekennzeichnet, dass** die Elemente des Montagesystems zumindest teilweise in Leichtbauweise hergestellt sind.

16. Trägerprofil (16, 17; 96) für die Montage von Solaranlagen als Indachsystem, **dadurch gekennzeichnet, dass** das Trägerprofil (16, 17; 96) zur Befestigung von gerahmten Solarmodulen (10) vorgesehen ist, wobei durch das Trägerprofil (16, 17; 96) eine Abdichtung gegenüber einer Dachhaut realisiert wird.

17. Trägerprofil nach Anspruch 16, **gekennzeichnet durch** wenigstens eines der Merkmale gemäß wenigstens einem der Ansprüche 2 bis 6.

18. Verfahren zur Montage von Solaranlagen als Indachsystem, **dadurch gekennzeichnet, dass** auf einer Dachtragekonstruktion eine abdichtende Trägerprofilstruktur montiert wird, an der wenigstens ein mit einem Rahmenprofil (11, 12; 82) eingefasstes Solarmodul (10) befestigt wird.

19. Verfahren nach Anspruch 18, **dadurch gekennzeichnet, dass** zur Montage der Solaranlage ein Montagesystem gemäß einem der Ansprüche 1 bis 15 verwendet wird.
